# EUROPEAN PATENT APPLICATION

(11) **EP 3 398 812 A1**
(43) Date of publication of application: **07.11.2018**
(21) Application number: 16881699.9
(22) Date of filing: 22.12.2016
(51) Int. Cl.: B60Q 1/00, B60Q 1/02

(54) **SCANNING HEADLIGHT AND CONTROL METHOD AND PROGRAM FOR SCANNING HEAD LIGHT**

(30) Priority: 28.12.2015 JP 2015256474
(71) Applicant: Ortus Technology Co., Ltd., Tokyo 191-0065 (JP)
(72) Inventor: DAIKU Yasuhiro, Hino-shi Tokyo 191-0065 (JP)
(74) Representative: White, Duncan Rohan
(86) International application number: PCT/JP2016/088426
(87) International publication number: WO 2017/115724

(57) **Abstract**

The present invention provides a scanning headlight, a control method of the scanning headlight and a program of the scanning headlight capable of assisting a driver recognize the traffic environment in front of the vehicle more safely. A scanning headlight 100 has a pattern irradiation unit 110 that irradiates a front environment of a moving body with a continuous pattern of visible light and a controller 120 that controls an operation of the pattern irradiation unit 110. When an obstacle existing in the front environment of the moving body is irradiated with the continuous pattern, a discontinuous pattern is formed in front of the moving body.

## Description

### TECHNICAL FIELD

The present invention relates to a scanning headlight, a control method of the scanning headlight and a program of the scanning headlight. For example, the present invention relates to a technology for assisting recognition of traffic environment in front of a vehicle.

### BACKGROUND ART

Conventionally, it was necessary for a driver of the vehicle to visually recognize pedestrians depending on illumination of headlights during a night time. However, it was difficult in some cases to visually recognize pedestrians only by the illumination of headlights from a sufficiently safe distance.

In recent years, as a technology of supporting driving at night, a technology of detecting pedestrians by using invisible rays such as infrared ray is disclosed. For example, Patent Document 1 describes a system that acquires images of the traffic environment in front of the vehicle by an infrared camera installed at the front end of the vehicle, recognizes pedestrians by image processing, and notifies the existence of pedestrians to a driver by sound or an in-cabin display.

### PRIOR ART DOCUMENTS

### [Non-patent Documents]

[Non-patent Document 1] "Honda Technology Guide, Intelligent Night Vision System," [online], Honda Motor Co., Ltd., [Searched on November 8, 2015], Internet <URL: http://www.honda.co.jp/tech/auto/night-vision/index.html>

### DISCLOSURE OF THE INVENTION

### [Problems to be Solved by the Invention]

In the conventional method shown in Non-Patent Document 1, since the position of the pedestrians is displayed on the in-cabin display, the driver should recognize the position of the pedestrians by viewing the display and then move the view point to the front environment to actuary recognize the pedestrians. However, it is observed that a reaction time to the change of the front environment becomes longer when the in-cabin display is used compared to the case when the in-cabin display is not used. It is said that moving the view point from the near side to the far (front) side imposes a big burden on a person. This is called "rubber band phenomenon of attention." If the above is correct, in order to quickly react to the change of the front environment, it is better to draw attention to the farther side during the driving considering a mechanism of a person's attention.

The present invention is to solve the above described problems. The present invention aims for providing a scanning headlight, a control method of the scanning headlight and a program of the scanning headlight capable of assisting a driver recognize the traffic environment in front of the vehicle more safely.

### [Means for Solving the Problem]

The scanning headlight concerning one embodiment of the present invention has a pattern irradiation unit that irradiates a front environment of a moving body with a continuous pattern of visible light and a controller that controls an operation of the pattern irradiation unit, wherein a discontinuous pattern is formed in front of the moving body when an obstacle existing in the front environment of the moving body is irradiated with the continuous pattern.

### [Effects of the Invention]

The present invention can provide a scanning headlight, a control method of the scanning headlight and a program of the scanning headlight capable of assisting a driver recognize the traffic environment in front of the vehicle more safely.

### BRIEF DESCRIPTION OF THE DRAWINGS

Fig. 1 is a drawing showing a configuration of a scanning headlight 100.
Figs. 2A and 2B are drawings showing configuration examples of a pattern irradiation unit 110.
Fig. 3 is a drawing showing a state of detecting an obstacle by irradiating a scanning pattern.
Fig. 4 is a drawing showing a state of detecting an obstacle by irradiating a scanning pattern.
Fig. 5 is a drawing showing a state of detecting an obstacle by irradiating a scanning pattern.
Fig. 6 is a drawing showing a configuration of the scanning headlight 100 of the second embodiment when an obstacle detection unit 130 is further provided.

### MODES FOR CARRYING OUT THE INVENTION

Hereafter, specific embodiments of the present invention will be explained in detail with reference to the drawings.

### <Embodiment 1>

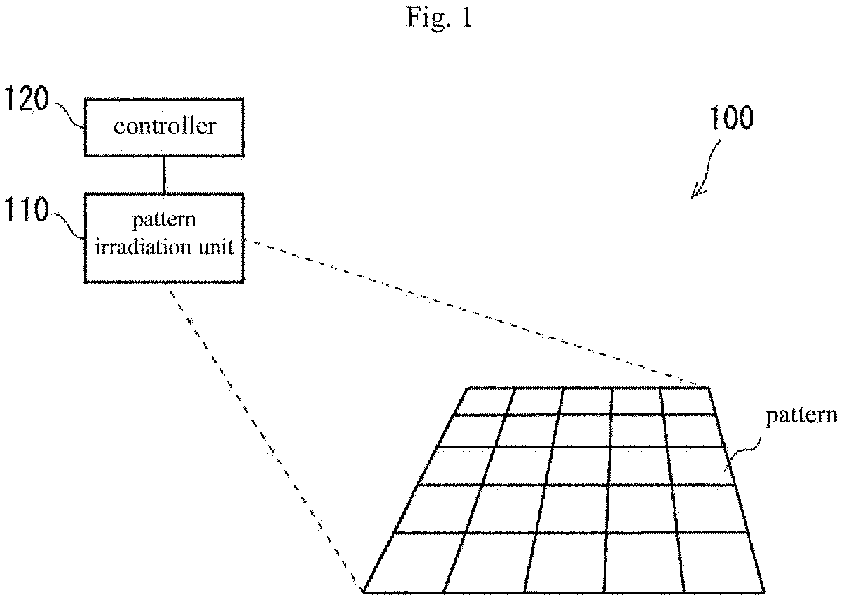

First, the configuration of the scanning headlight concerning the first embodiment of the present invention will be explained by using a block diagram of Fig. 1.

The scanning headlight 100 has a pattern irradiation unit 110 and a controller 120.

The pattern irradiation unit 110 has a function of generating a continuous pattern (hereafter, referred to as a scanning pattern) of visible light and irradiating a front environment of a moving body (an area ahead of the moving body). The pattern irradiation unit 110 is typically arranged in a headlight unit of an automobile or near the headlight unit.

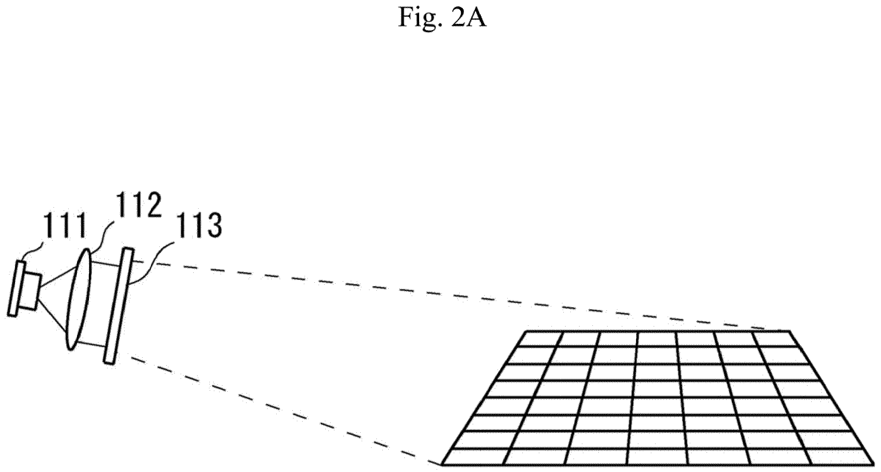

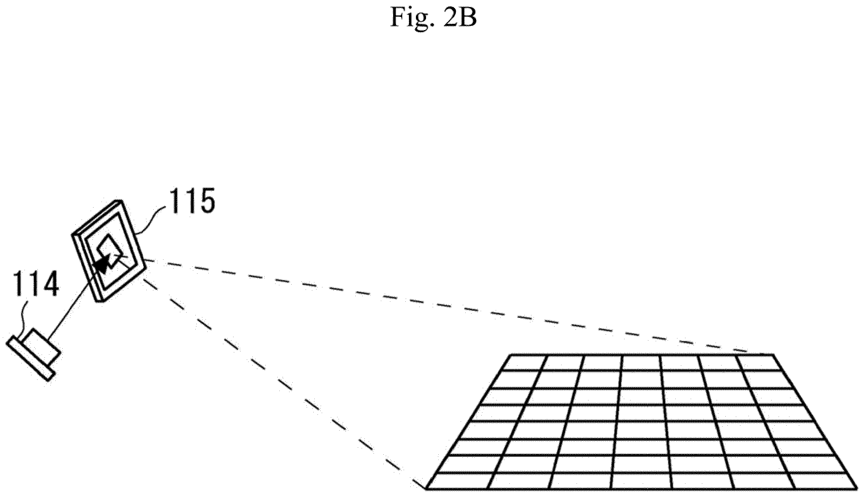

Figs. 2A and 2B show specific configuration examples of the pattern irradiation unit 110. Fig. 2A is a configuration example of the pattern irradiation unit 110 using a DOE (Diffraction Optical Element). The pattern irradiation unit 110 includes a laser element 111, a lens 112 and a DOE 113. The laser element 111 emits laser light. The lens 112 magnifies the laser light until the laser light becomes parallel light or a state close to the parallel light. The DOE 113 is an optical element using diffraction phenomenon of light. The DOE 113 has functions such as a lens function, a function of adjusting optical power density distribution, and functions of branching, multiplexing, diffusion, deflection and reflection. The scanning pattern can be irradiated efficiently without adjusting focus by making the laser light incident on the DOE 113 on which an arbitrary pattern is preliminarily formed. Note that a HOE (Holographic Optical Element) can be also used instead of the DOE 113.

Fig. 2B is a configuration example of the pattern irradiation unit 110 using a MEMS mirror. The pattern irradiation unit 110 includes a laser element 114 and a MEMS mirror 115. The MEMS mirror 115 is biaxially swung to reflect the laser beam. Thus, a raster scan is performed and an arbitral scanning pattern can be irradiated.

In general, when the DOE 113 is used, the scanning pattern can be irradiated by a simple mechanism. Thus, the DOE 113 has advantages of downsizing, power saving and high-efficiency. On the other hand, the scanning patterns irradiated by the DOE 113 are fixed. In this respect, when the MEMS mirror 115 is used, an arbitral position in a drawing area can be irradiated with an arbitral scanning pattern.

The controller 120 controls the pattern irradiation unit 110 to drive the pattern irradiation unit 110 and make the pattern irradiation unit 110 irradiate the front environment with the scanning pattern. Typically, the controller 120 is a microcomputer to perform a predetermined operation according to a program preliminarily stored in a not-illustrated storage unit. In addition, the controller 120 can receive output from not-illustrated sensors and perform various operations according to the received contents.

Next, an operation of the scanning headlight 100 will be explained.

The controller 120 drives the pattern irradiation unit 110 to make the pattern irradiation unit 110 start irradiating the scanning pattern.

The pattern irradiation unit 110 generates a predetermined scanning pattern by a laser light having a wavelength in the visible region and irradiates the scanning pattern toward the front environment. The scanning pattern can be irradiated simultaneously with the normal headlight. Alternatively, the scanning pattern can be irradiated alone.

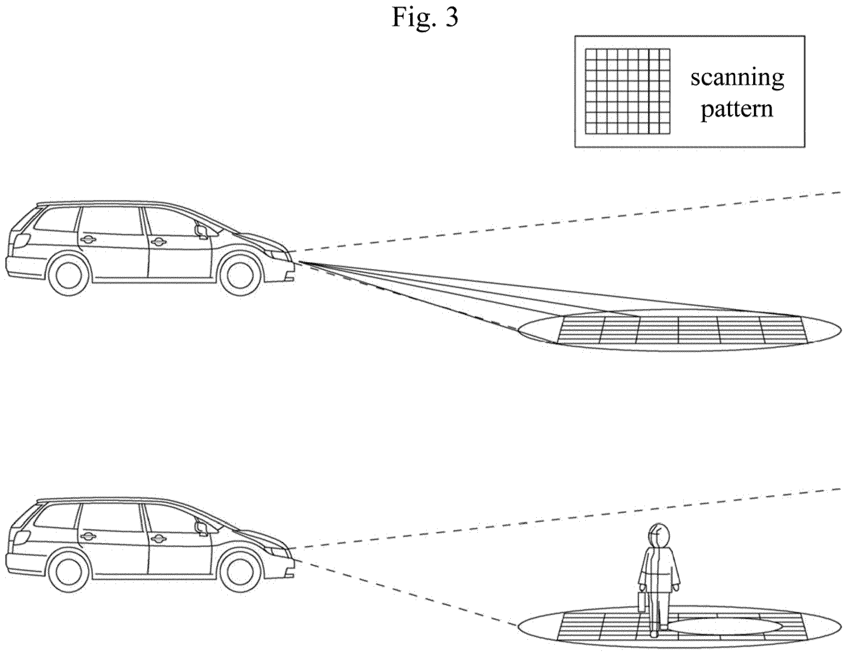

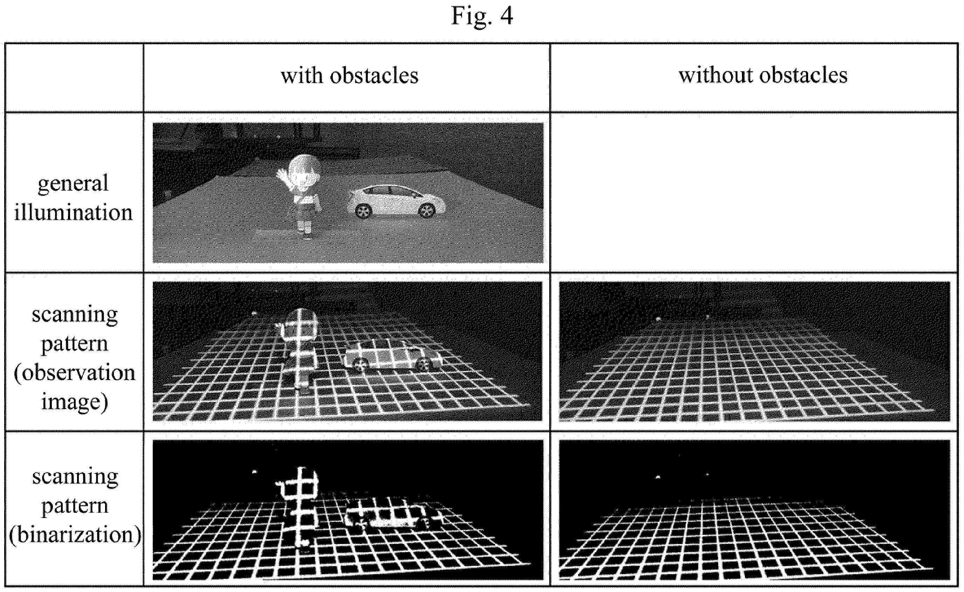

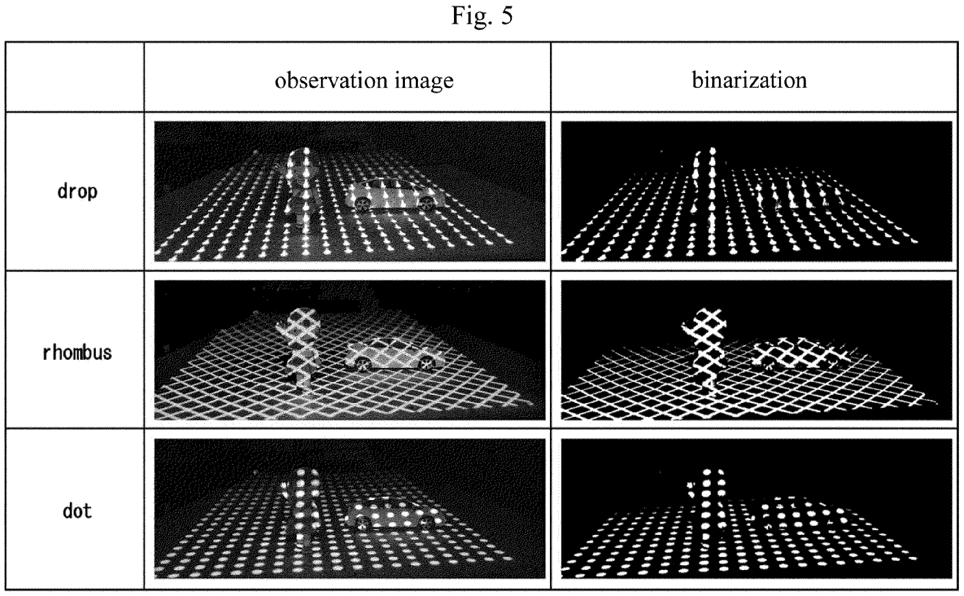

The scanning pattern is preferably a continuous pattern of visible light. For example, the scanning pattern can be a grid pattern formed by straight lines as shown in Fig. 3 and Fig. 4 and continuous patterns formed by "drop" marks, "rhombus" lines, "dot" marks or the like as shown in Fig. 5.

When the front environment of the moving body (typically, the vehicle) is irradiated with the scanning pattern, a continuous pattern is projected on the road in front of the moving body if there is no obstacle on the road in front of the moving body (Fig. 3 and Fig. 4).
On the other hand, when there is an obstacle on the road in front of the vehicle, the scanning pattern is projected on the road and on the surface of the obstacle. The scanning pattern projected on the surface of the obstacle is recognized by the driver as a discontinuous pattern having no continuity with the surrounding region. For example, pedestrians, vehicles, falling objects and unevenness (holes and projections) of the road existed in the front environment can be typically assumed as the obstacle.

Fig. 4 is an experimental example showing an appearance when the obstacle is irradiated with the scanning pattern. In this experiment, first, workpieces simulating the obstacles such as a pedestrian and a vehicle are placed on a table simulating the road. Next, the road and the obstacles are irradiated with the scanning pattern having a grid pattern formed by straight lines. As a result, a continuous grid formed by straight lines is projected on the road on which no obstacle exists. On the other hand, a deformed scanning pattern having no continuity with the surrounding region is formed on the surface of the obstacles.

Fig. 5 shows an experimental example when the obstacle is irradiated with other scanning patterns. In all scanning patterns, it is shown that a continuous pattern is projected on the flat surface of the road surfaces and an apparently discontinuous pattern is formed on the obstacles.

As described above, in the present embodiment, the pattern irradiation unit 110 irradiates the front environment with the continuous pattern and generates the discontinuous pattern on the surface of the obstacles. The driver recognizes the discontinuous pattern and the driver can clearly see the obstacle existed in the front environment by the discontinuous pattern as a trigger. Thus, the driver can recognize the obstacle without moving the line of sight from the front environment. Therefore, the driver can quickly react to the change of the front environment compared to the conventional technology that notifies the existence of the obstacle using the in-cabin display or the like. Accordingly, safety when driving the vehicle is improved.

### <Second embodiment>

In addition to merely irradiating the front environment with the scanning pattern, the second embodiment shows an example where the controller 120 controls the pattern irradiation unit 110 so as to change the form of the irradiation of the scanning pattern based on various conditions.

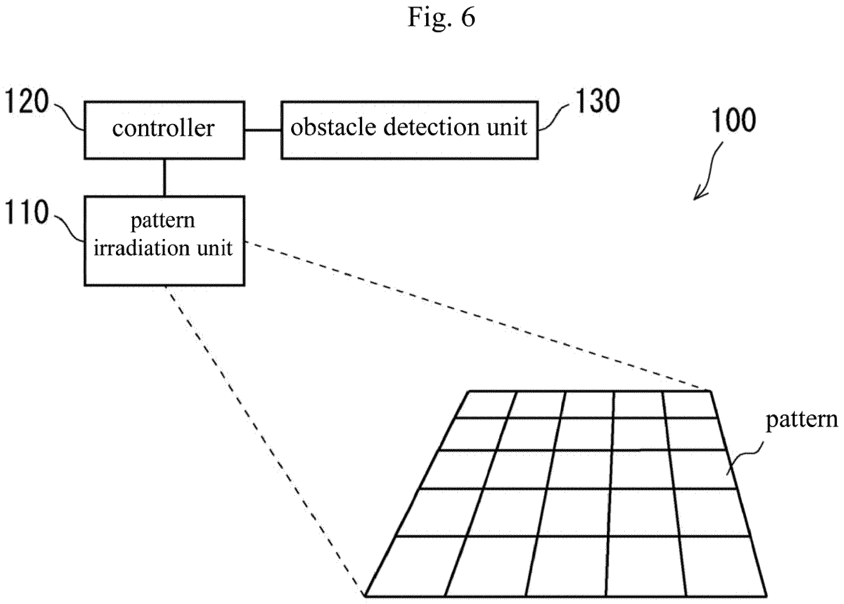

Preferably, the scanning headlight 100 concerning the second embodiment further has an obstacle detection unit 130 that detects whether or not the obstacle exists in the front environment and detects the position (e.g., direction and distance) of the obstacle if the obstacle exists (Fig. 6). Other configurations are same as the first embodiment unless otherwise specified.

Hereafter, an example of the operation of the scanning headlight 100 concerning the second embodiment will be explained.

### (A) Control of irradiation timing

First, the obstacle detection unit 130 detects that the obstacle exists in the front environment. The detailed explanation of the method of detecting the obstacle is omitted here since it is publicly known as shown in Non-Patent Document 1, for example. The obstacle detection unit 130 notifies the detection of the obstacle to the controller 120. Then, according to the notification notified from the obstacle detection unit 130, the controller 120 drives the pattern irradiation unit 110 and starts irradiating the front environment with the scanning pattern. Thus, the scanning headlight 100 can irradiate the scanning pattern only when the driver's attention needs to be attracted because of the existence of the obstacle. Consequently, the driver's attention can be attracted more efficiently.

In addition, it is also possible that the controller 120 drives the pattern irradiation unit 110 when an outside brightness is lower than a predetermined threshold value. Thus, the scanning pattern can be shown only when the visibility is low because of lack of brightness. Note that the outside brightness can be easily obtained by using a publicly known illuminance sensor.

Alternatively, it is also possible that the controller 120 drives the pattern irradiation unit 110 when the headlight is turned on or the headlight is set to a high beam or a low beam. Thus, driver assistance can be appropriately performed in accordance with the environment.

### (B) Control of irradiation position

First, the obstacle detection unit 130 detects the position of the obstacle that exists in the front environment. Then, according to the notification notified from the obstacle detection unit 130, the controller 120 drives the pattern irradiation unit 110 to irradiate only the surrounding region of the obstacle with the scanning pattern. Thus, it is possible to efficiently indicate the region to be cared by the driver.

Alternatively, it is also possible that the pattern irradiation unit 110 is controlled not to irradiate the driver of the oncoming vehicle that exists in the front environment when the obstacle detection unit 130 detects the position of the oncoming vehicle. Note that the detailed explanation of the technology of detecting the oncoming vehicle and the driver is omitted here since it is publicly known.

As explained above, the controller 120 can control the pattern irradiation unit 110 to irradiate only the predetermined region of the front environment with the scanning pattern or not to irradiate the predetermined region with the scanning pattern based on the predetermined conditions. It is apparent that the irradiation range can be controlled by controlling the swing of the MEMS mirror 115 if the pattern irradiation unit 110 includes the MEMS mirror 115. In addition, if the pattern irradiation unit 110 has a configuration having a plurality of DOEs 113, the irradiation range can be controlled to some extent by controlling a presence (presence/absence) of the incidence of the laser light which is made incident on each of the DOEs 113.

### (C) Control of color, luminance and the like

The controller 120 can change an emission luminance and a color of the pattern irradiation unit 110 according to an outside brightness. For example, the luminance of the irradiation of the scanning pattern can be increased as the outside brightness becomes brighter. Thus, it is possible to always keep the visibility of the scanning pattern to an appropriate level

In addition, the controller 120 can change a part of the form of the scanning pattern based on predetermined conditions. For example, a color, a luminance, a shape and a density of the scanning pattern can be changed. For example, the controller 120 can change the form of the scanning pattern only at the surrounding region of the obstacle detected by the obstacle detection unit 130. Thus, it is possible to indicate the region to be cared by the driver more efficiently.

In the embodiment of the present invention, the controller 120 controls the pattern irradiation unit 110 to change the irradiation conditions of the scanning pattern based on various conditions. Thus, it is possible to assist the driver more efficiently and improve safety.

Although the scanning headlight 100 is mounted on the vehicle in the above described embodiment, the present invention is not limited to such a configuration. For example, the present invention can be also applied to various moving bodies such as an automobile, an aircraft and a ship.

In addition, although the controller 120 and the obstacle detection unit 130 are explained as specific hardware in the above described embodiment, the present invention is not limited to such a configuration. For example, similar process can be achieved by executing computer programs by a CPU (Central Processing Unit). In this case, the computer programs can be stored by using various types of non-transitory computer readable media and supplied to the computer. Various types of tangible storage media are included in the non-transitory computer readable media. As an example of the non-transitory computer readable media, magnetic recording media (e.g., flexible disk, magnetic tape, hard disk drive), magnetooptical medium (e.g., magnetooptical disc), CD-ROM (Read Only Memory), CD-R, CD-R/W, semiconductor memory (e.g., mask ROM, PROM (Programmable ROM), EPROM (Erasable PROM), flash ROM and RAM (Random Access Memory)) can be listed. In addition, the programs can be supplied to the computer by using various kinds of transitory computer readable media. As an example of the transitory computer readable media, electrical signal, optical signal and electromagnetic wave can be listed. The transitory computer readable media can supply the programs to the computer via wire communication path such as electric wire and optical fiber or wireless communication path.

Note that various embodiments can be freely combined, any configurations of the embodiments can be modified, and any configurations of the embodiments can be omitted in the present invention within the scope of the present invention.

The present invention is based on Japanese Patent Application No. 2015-256474 filed by the applicant of the present invention in Japan on December 28, 2015, the entire disclosure of which is incorporated by reference in the present invention.

### [Description of the Reference Numerals]

- 100:: scanning headlight
- 110:: pattern irradiation unit
- 120:: controller
- 130:: obstacle detection unit

## Claims

1. A scanning headlight, comprising:
a pattern irradiation unit that irradiates a front environment of a moving body with a continuous pattern of visible light; and
a controller that controls an operation of the pattern irradiation unit, wherein
a discontinuous pattern is formed in front of the moving body when an obstacle existing in the front environment of the moving body is irradiated with the continuous pattern.

2. The scanning headlight according to claim 1, further comprising:
an obstacle detection unit that detects an existence of the obstacle, wherein
the controller makes the pattern irradiation unit irradiate the front environment with the continuous pattern when the obstacle detection unit detects the existence of the obstacle.

3. The scanning headlight according to claim 2, wherein
the controller changes an irradiation range of the continuous pattern according to a position of the obstacle detected by the obstacle detection unit.

4. The scanning headlight according to claim 2, wherein
the controller changes at least one of a color, a luminance, a shape and a density of the continuous pattern in a specific region of an irradiation range of the continuous pattern according to a position of the obstacle detected by the obstacle detection unit.

5. The scanning headlight according to claim 1,
the controller determines at least one of a presence of the continuous pattern and a luminance of the continuous pattern according to an outside brightness.

6. The scanning headlight according to claim 1,
the pattern irradiation unit is arranged near a headlight of the moving body so as to irradiate the obstacle located in front of the moving body.

7. A control method of a scanning headlight, comprising:
a step of controlling an operation of a pattern irradiation unit; and
a pattern irradiation step of irradiating a front environment of a moving body with a continuous pattern of visible light by the pattern irradiation unit, wherein
a discontinuous pattern is formed in front of the moving body when an obstacle existing in the front environment of the moving body is irradiated with the continuous pattern.

8. A program for making a computer execute the method according to claim 7.
